# EUROPEAN PATENT APPLICATION

(11) **EP 4 550 920 A1**
(43) Date of publication of application: **07.05.2025**
(21) Application number: 22948648.5
(22) Date of filing: 30.06.2022
(51) Int. Cl.: H04W 74/02, H04W 74/00, H04W 24/02

(54) **INFORMATION RECORDING METHOD AND APPARATUS, INFORMATION SENDING METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2022/103185
(87) International publication number: WO 2024/000546

(57) **Abstract**

The present disclosure provides an information recording method and apparatus, an information sending method and apparatus, and a storage medium. The information recording method comprises: recording one or more pieces of characteristic information for random access (RA). In the present disclosure, a terminal can record that one or more pieces of characteristic information for RA are associated, so that after subsequent reporting to a network device, the network device can optimize the RA resource configuration according to terminal demands, and the availability is high.

## Description

### TECHNICAL FIELD

The present disclosure relates to the communication field, and in particular to an information recording method, an information sending method, an information recording apparatus, an information sending apparatus, and a storage medium.

### BACKGROUND

In Release 17 (R17), specific random access (RA) partitions are configured for multiple features or feature combinations to achieve early identification of R17 features by a network device, so that the network device can subsequently provide corresponding reasonable configurations. The terminal initiates random access based on a specific RA partition resource, so that the network device can realize early identification of a feature or a feature combination by identifying the RA partition resource selected by the terminal.

However, due to limitations on random access resources and actual network deployment, the network device may not provide specific RA partitions for all feature combinations, that is, no corresponding RA partition can be found for some feature combinations. In this case, if the terminal performs RA partition selection based on a feature priority configured by the network, priority is given to ensuring that high-priority features can find the corresponding RA partitions. That is, the RA partition finally selected by the terminal may be unable to support all features or feature combinations applicable to current RA.

### SUMMARY

To overcome problems existing in related art, embodiments of the present disclosure provide an information recording method, an information sending method, an information recording apparatus, an information sending apparatus, and a storage medium.

According to a first aspect of embodiments of the present disclosure, an information recording method is provided. The method is performed by a terminal and includes:
recording one or more pieces of feature information applicable to random access (RA).

Optionally, the method further includes at least one of:
determining, by the terminal, to record the one or more pieces of feature information applicable to RA; or
determining, according to first information sent by a network device, to record the one or more pieces of feature information applicable to RA.

Optionally, determining, by the terminal, to record the one or more pieces of feature information applicable to RA includes:
in response to the terminal having the one or more pieces of feature information applicable to RA, determining, by the terminal, to record the one or more pieces of feature information applicable to RA.

Optionally, determining, by the terminal, to record the one or more pieces of feature information applicable to RA includes:
determining, by the terminal, to record the one or more pieces of feature information applicable to RA in response to determining that an RA resource selected by the terminal does not support the feature information applicable to RA.

Optionally, the first information is used to indicate at least one of:
recording any feature information applicable to RA; or
recording specified feature information applicable to RA.

Optionally, the first information is used to indicate recording specified feature information applicable to RA;
determining, according to the first information sent by the network device, to record the one or more pieces of feature information applicable to RA includes:
recording the feature information applicable to RA in response to determining that the specified feature information is included in the one or more pieces of feature information applicable to RA.

Optionally, the first information is RA configuration information associated with one or more features.

Optionally, determining, according to the first information sent by the network device, to record the one or more pieces of feature information applicable to RA includes:
determining to record the one or more pieces of feature information applicable to RA in response to determining that the network device has sent RA configuration information associated with one or more features.

Optionally, determining, according to the first information sent by the network device, to record the one or more pieces of feature information applicable to RA include:
determining to record the one or more pieces of feature information applicable to RA in response to determining that the one or more pieces of feature information applicable to RA includes one or more features associated with RA configuration information sent by the network device.

Optionally, recording the one or more pieces of feature information applicable to RA includes any of:
recording all feature information applicable to RA;
recording feature information applicable to RA that is not supported by a selected RA resource;
recording specified feature information applicable to RA; or
recording all feature information corresponding to specified feature information applicable to RA.

Optionally, the feature information includes at least one of:
small data transmission (SDT);
a reduced capability (RedCap) device;
radio network (RAN) slicing; or
coverage enhancement (CE).

Optionally, the RAN slicing includes at least one of:
feature information for indicating that a feature is the radio network slicing; or
identification information for identifying the radio network slicing.

Optionally, recording the feature information applicable to RA includes any of:
recording the feature information applicable to RA based on each RA attempt; or
recording the feature information applicable to RA based on each RA procedure.

Optionally, the RA includes at least one of:
two-step RA; or
four-step RA.

Optionally, the RA at least includes a contention-based random access (CBRA) procedure.

According to a second aspect of embodiments of the present disclosure, an information sending method is provided. The method is executed by a network device and includes:
sending first information; in which the first information is used by a terminal to determine to record one or more pieces of feature information applicable to random access (RA).

Optionally, the first information is used to indicate at least one of:
recording any feature information applicable to RA; or
recording specified feature information applicable to RA.

Optionally, the first information is RA configuration information associated with one or more features.

Optionally, the feature information includes at least one of:
small data transmission (SDT);
a reduced capability device (RedCap);
radio network (RAN) slicing; or
coverage enhancement (CE).

Optionally, the RAN slicing includes at least one of:
feature information for indicating that a feature is the radio network slicing; or
identification information for identifying the radio network slicing.

Optionally, the RA includes at least one of:
two-step RA; or
four-step of RA.

Optionally, the RA at least includes a contention-based random access (CBRA) procedure.

According to a third aspect of embodiments of the present disclosure, an information recording apparatus is provided, and the apparatus is applied to a terminal and includes:
a reporting module, configured to report specified information; in which the specified information is associated with one or more pieces of feature information applicable to random access (RA).

According to a fourth aspect of embodiments of the present disclosure, an information sending apparatus is provided, and the apparatus is applied to a network device and includes:
a receiving module, configured to receive specified information; in which the specified information is associated with one or more pieces of feature information applicable to random access (RA).

According to a fifth aspect of embodiments of the present disclosure, a computer-readable storage medium is provided, the storage medium stores a computer program, and the computer program is used to perform any one of the above information recording method.

According to a sixth aspect of embodiments of the present disclosure, a computer-readable storage medium is provided, the storage medium stores a computer program, and the computer program is used to perform any one of the above information sending method.

According to a seventh aspect of embodiments of the present disclosure, an information recording device is provided, including:
a processor;
a memory for storing instructions executable by the processor.

The processor is configured to perform the information sending method according to any one of above aspects.

According to an eighth aspect of embodiments of the present disclosure, an information sending device is provided, including:
a processor;
a memory for storing instructions executable by the processor.

The processor is configured to perform the information sending method according to any one of above aspects.

The technical solutions provided by embodiments of the present disclosure may include the following beneficial effects.

In the embodiments of the present disclosure, the terminal can record association of one or more pieces of feature information applicable to RA, so that after they are reported to the network device subsequently, the network device can optimize the RA resource configuration according to terminal needs, with high availability.

It should be understood that the foregoing general description and the following detailed description are exemplary and explanatory only, and do not limit the present disclosure.

### BRIEF DESCRIPTION OF THE DRAWINGS

The accompanying drawings, which are incorporated in and constitute a part of the description, illustrate embodiments consistent with the disclosure and together with the description serve to explain the principles of the disclosure.
FIG. 1 is a flowchart of an information recording method according to an exemplary embodiment.
FIG. 2 is a flowchart of an information recording method according to an exemplary embodiment.
FIG. 3 is a flowchart of an information recording method according to an exemplary embodiment.
FIG. 4 is a flowchart of an information sending method according to an exemplary embodiment.
FIG. 5 is a block diagram of an information recording apparatus according to an exemplary embodiment.
FIG. 6 is a block diagram of an information sending apparatus according to an exemplary embodiment.
FIG. 7 is a schematic structural diagram of an information recording device according to an exemplary embodiment of the present disclosure.
FIG. 8 is a schematic structural diagram of an information sending device according to an exemplary embodiment of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the disclosure. Rather, they are merely examples of apparatus and methods consistent with aspects of the disclosure as detailed in the appended claims.

The terminology used in this disclosure is for the purpose of describing particular embodiments only and is not intended to limit the disclosure. As used in this disclosure and the appended claims, the singular forms "a," "the" and "said" are intended to include the plural forms as well, unless the context clearly indicates otherwise. It will also be understood that the term "and/or" as used herein refers to and includes any and all possible combinations of at least one associated listed item.

It should be understood that although the terms first, second, third, etc. may be used in this disclosure to describe various information, the information should not be limited to these terms. These terms are only used to distinguish information of the same type from each other. For example, without departing from the scope of the present disclosure, the first information may also be referred to as the second information, and similarly, the second information may also be referred to as the first information. Depending on the context, the word "if" as used herein may be interpreted as "when" or "while" or "in response to determining."

A process of a terminal performing a random access (RA) resource collection (or partition) is as follows.

Step 1, a feature or a feature combination that is applicable to a current RA is determined.

In embodiments of the present disclosure, the feature or feature combination that is applicable to the RA include at least one of the following: small data transmission (SDT); a reduced capability (RedCap) device; radio network (RAN) slicing; coverage enhancement (CE).

The CE is determined based on a resource configuration and a message 3 reference signal receiving power threshold (rsrp-ThresholdMsg3). If a selected bandwidth part (BWP) is configured with an RA resource of the CE and an RA resource of non-coverage enhancement (non-CE), and a Reference Signal Receiving Power (RSRP) is lower than the rsrp-ThresholdMsg3, or the selected BWP is only configured with an RA resource of the CE, it is determined that the CE can be applicable to the current RA. The applicability of the SDT is determined based on a Media Access Control (Medium Access Control, MAC) entity. The applicability of the RAN slicing is determined by an upper-layer triggering. The applicability of the RedCap is also determined based on an upper-layer triggering and is applicable to a Physical Downlink Control Channel (PDCCH) order triggering, i.e., Content-Free Random Access (CFRA), or an RA triggered by any other MAC process.

Step 2, whether there are available RA resources for the feature or feature combination that is applicable to the current RA. If not, a legacy RA resource (that is, an RA resource that is not associated with any feature indication) is selected. If there is one available RA resource, this available RA resource is selected. If there are multiple available RA resources, resource selection is performed based on feature priorities configured by a network.

In particular, for a CFRA procedure of a RedCap UE, in order to ensure that the network side can identify the RedCap UE, if the network configures an RA resource that only contain an RedCap feature indication, its CFRA parameter initialization and falling back from the CFRA to a contention-based random access (CBRA) may be executed based on the parameter in a RA resource configuration.

Currently, information recording related to the R17 RA partition is not supported. In order to solve this technical problem, the present disclosure provides an information recording method, an information sending method, an information recording device, an information sending device, and a storage medium. A terminal can record one or more pieces of feature information that is applicable to RA, and a network device can optimize RA resource configuration according to the terminal needs subsequently, with high availability.

The information recording method provided by the disclosure is first introduced from the terminal side.

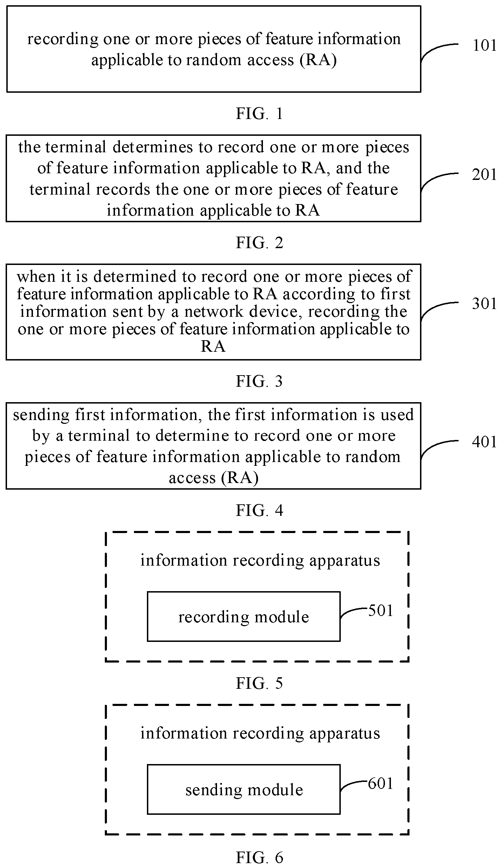

An embodiment of the present disclosure provides an information recording method. Referring to FIG. 1, FIG. 1 is a flow chart of an information recording method according to an embodiment, which can be executed by a terminal. The method can include the following steps.

At step 101, one or more pieces of feature information applicable to random access (RA) are recorded.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the RAN slicing; or identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), and the disclosure does not limit this.

In a possible implementation, one or more pieces of feature information applicable to the RA may be any feature information applicable to the RA, or specified feature information applicable to the RA.

It should be noted that the one or more pieces of feature information applicable to RA can be feature information that triggers random access, or a feature through which the terminal intends to achieve early indication through a specific RA resource, and are different from feature information supported by an RA ultimately initiated by the terminal. The feature information supported by the RA ultimately initiated by the terminal may include at least part of the one or more pieces of feature information applicable to RA.

For example, the feature information applicable to RA includes the RAN slicing and the CE, and the feature information supported by an RA ultimately initiated by the terminal may be the CE.

In a possible implementation, the terminal may record the one or more pieces of feature information applicable to RA for each RA attempt.

In another possible implementation, the terminal may record the one or more pieces of feature information applicable to RA for each RA procedure. Each RA procedure includes multiple RA attempts.

In a possible implementation, the RA includes at least one of the following: two-step RA; or four-step RA.

The RA at least includes a contention-based random access process (CBRA).

In a possible implementation, the terminal may record all feature information applicable to RA.

For example, the terminal records all feature information applicable to RA, which includes SDT and CE, RedCap, SDT and RedCap.

In another possible implementation, the terminal may record feature information applicable to RA that is not supported by a selected RA resource.

For example, all feature information applicable to RA includes SDT and CE, and the feature information applicable to RA that is not supported by the selected RA resource is CE, then the terminal only records CE.

In another possible implementation, the terminal records specified feature information applicable to RA. The specified feature information applicable to RA may be determined by the terminal or indicated by the network device, which is not limited in the disclosure.

For example, the specified feature information applicable to RA is RedCap. If the feature information applicable to RA is RedCap and CE, the terminal may only record the specified feature information applicable to RA, that is, the terminal only records RedCap.

In another possible implementation, the terminal records all feature information corresponding to specified feature information applicable to RA.

For example, the specified feature information applicable to RA is RedCap. If the feature information applicable to RA is RedCap and CE, the terminal can record RedCap and CE.

In a possible implementation, the terminal can record the one or more pieces of feature information applicable to RA through a separate information element (IE).

In another possible implementation, the terminal can reuse an existing IE in the protocol, such as an extension bit raPurposes to record the one or more pieces of feature information applicable to RA.

In the above embodiments, the terminal can record the one or more pieces of feature information applicable to RA, and subsequently report the one or more pieces of feature information applicable to RA to the network device. The network device can optimize the RA resource configuration according to the terminal needs, thus the availability is high.

In some optional embodiments, referring to FIG. 2, which is a flow chart of an information recording method according to an embodiment, which can be executed by a terminal. The method can include the following steps.

At step 201, the terminal determines to record one or more pieces of feature information applicable to RA, and the terminal records the one or more pieces of feature information applicable to RA.

In embodiments of the present disclosure, the terminal can record the one or more pieces of feature information applicable to RA after determining to record the one or more pieces of feature information applicable to RA without the assistance of a network device.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), and the disclosure does not limit this.

In a possible implementation, the one or more pieces of feature information applicable to RA may be any feature information applicable to RA, or specified feature information applicable to RA.

It should be noted that the one or more pieces of feature information applicable to RA can be feature information that triggers random access, or a feature through which the terminal intends to achieve early indication through a specific RA resource, and are different from feature information supported by an RA ultimately initiated by the terminal. The feature information supported by the RA ultimately initiated by the terminal may include at least part of the one or more pieces of feature information applicable to RA.

In a possible implementation, when the terminal has one or more pieces of feature information applicable to RA, the terminal determines to record the one or more pieces of feature information applicable to RA.

In embodiments of the present disclosure, if the terminal has one or more pieces of feature information applicable to RA determined and indicated by an MAC layer, a Radio Resource Control (RRC) layer or an upper layer, it is deemed that the terminal has the one or more pieces of feature information applicable to RA. At this time, the terminal can record the one or more pieces of feature information applicable to RA.

In another possible implementation, when an RA resource selected by the terminal does not support feature information applicable to RA, the terminal determines to record the one or more pieces of feature information applicable to RA.

The RA resource selected by the terminal does not support the feature information applicable to RA may mean that the RA eventually initiated by the terminal fails to support all the feature information applicable to RA.

For example, all the feature information applicable to RA includes SDT and CE, and the RA resource selected by the terminal does not support CE, then the terminal determines to record the one or more pieces of feature information applicable to RA.

In a possible implementation, the terminal may record the one or more pieces of feature information applicable to RA for each RA attempt.

In another possible implementation, the terminal may record the one or more pieces of feature information applicable to RA for each RA procedure. Each RA procedure includes multiple RA attempts.

In a possible implementation, the RA includes at least one of the following: two-step RA; or four-step RA.

The RA at least includes a competition-based CBRA.

In a possible implementation, when the terminal has one or more pieces of feature information applicable to RA, the terminal determines to record the one or more the terminal RA. At this time, the terminal can perform the recording to record all the feature information applicable to RA.

In embodiments of the present disclosure, if the terminal has one or more pieces of feature information applicable to RA that is determined and indicated by an MAC layer, an RRC layer or an upper layer, it is determined that the terminal has one or more pieces of feature information applicable to RA. In this case, the terminal may record the one or more pieces of feature information applicable to RA.

For example, the terminal records all feature information applicable to RA that is determined and indicated by the MAC layer, the RRC layer or the upper layer.

In another possible implementation, when the terminal has one or more pieces of feature information applicable to RA, it is determined to record the one or more pieces of feature information applicable to RA. At this time, the terminal may record feature information applicable to RA that is not supported by a selected RA resource.

For example, all the feature information applicable to RA includes SDT and CE, and the feature information applicable to RA that is not supported by the RA resource selected by the terminal is CE, then the terminal only records the unsupported feature information applicable to RA, i.e., the CE.

In another possible implementation, when the terminal has one or more pieces of feature information applicable to RA, the terminal determines to record the one or more pieces of feature information applicable to RA, and the terminal records specified feature information applicable to RA. The specified feature information applicable to RA may be determined by the terminal or indicated by a network device, which is not limited in the disclosure.

For example, the specified feature information applicable to RA is RedCap. If the feature information applicable to RA includes RedCap and CE, the terminal may only record the specified feature information applicable to RA, that is, the terminal only records the RedCap.

In another possible implementation, when the terminal has one or more pieces of feature information applicable to RA, the terminal determines to record the one or more pieces of feature information applicable to RA, and the terminal records all feature information corresponding to specified feature information applicable to RA.

For example, the specified feature information applicable to RA is RedCap. If the feature information applicable to RA is RedCap and CE, the terminal may record RedCap and CE.

In another possible implementation, when an RA resource selected by the terminal does not support the feature information applicable to RA, the terminal determines to record the one or more pieces of feature information applicable to RA. At this time, the terminal may record all feature information applicable to RA.

For example, if the RA resource selected by the terminal does not support CE, the terminal can record all feature information applicable to RA as CE and SDT.

In another possible implementation, when the RA resource selected by the terminal does not support the feature information applicable to RA, the terminal determines to record the one or more pieces of feature information applicable to RA. At this time, the terminal may record the feature information applicable to RA that is not supported by the selected RA resource.

In another possible implementation, when the RA resource selected by the terminal does not support the feature information applicable to RA, the terminal determines to record the one or more pieces of feature information applicable to RA. At this time, the terminal may record specified feature information applicable to RA. The specified feature information applicable to RA may be feature information not supported by RA resources, or other feature information applicable to RA specified by the terminal or the network device.

In another possible implementation, when the RA resource selected by the terminal does not support the feature information applicable to RA, the terminal determines to record the one or more pieces of feature information applicable to RA. At this time, the terminal may record all feature information corresponding to specified feature information applicable to RA. The specified feature information applicable to RA may be feature information not supported by RA resources, or other feature information applicable to RA specified by the terminal or the network device.

In a possible implementation, the terminal may record the one or more pieces of feature information applicable to RA through a separate IE.

In another possible implementation, the terminal can reuse an existing IE in the protocol, such as an extension bit raPurpose to record the one or more pieces of feature information applicable to RA.

In another possible implementation, the terminal may indicate, via 1 bit, whether the selected RA resource supports all feature information applicable to RA.

If the selected RA resource supports all feature information applicable to RA, the terminal can use the 1 bit to inform the network that the selected RA resource supports all feature information applicable to RA, so that the one or more pieces of feature information applicable to RA may not be recorded.

If the selected RA resource does not support all feature information applicable to RA, the terminal can use the 1 bit to inform the network that the selected RA resource fails to support all feature information applicable to RA, and the terminal records all the feature information applicable to RA, or records the feature information applicable to RA that is not supported by the selected RA resource.

In the above embodiments, when the terminal determines to record the one or more pieces of feature information applicable to RA, it can record the one or more pieces of feature information applicable to RA, so that after the one or more pieces of feature information applicable to RA are reported to the network device subsequently, the network device can optimize RA resource configuration according to the needs of the terminal, achieving high availability.

In some optional embodiments, when the terminal determines not to record the one or more pieces of feature information applicable to RA, the terminal determines not to perform the recording.

In a possible implementation, when the terminal does not have one or more pieces of feature information applicable to RA, the terminal determines not to perform the recording.

If the terminal does not have one or more pieces of feature information applicable to RA that is determined and indicated by an MAC layer, a Radio Resource Control (RRC) layer or an upper layer, it is determined that the terminal does not have one or more pieces of feature information applicable to RA.

In another possible implementation, when an RA resource selected by the terminal support all the feature information applicable to RA, the terminal determines not to record the one or more pieces of feature information applicable to RA.

For example, all feature information applicable to RA includes SDT and CE, and the RA resource selected by the terminal supports SDT and CE, then the terminal determines not to perform the recording.

Optionally, the terminal may indicate that the selected RA resource supports all feature information applicable to RA through 1 bit.

In the above embodiments, the terminal may not perform the recording, thereby saving terminal resources and achieving high availability.

In some optional embodiments, referring to FIG. 3, which is a flow chart of an information recording method according to an embodiment, which can be executed by a terminal. The method can include the following steps.

At step 301, when it is determined to record one or more pieces of feature information applicable to RA according to first information sent by a network device, the one or more pieces of feature information applicable to RA are recorded.

In embodiments of the disclosure, the network device includes any network side node. For example, the network side node may be a central network (CN) side node, a RAN side node, etc., and the disclosure does not limit this.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; or identification information for identifying the radio network slicing. The identification information may be an NSAG identification, a radio network slice identification, etc. The radio network slice identification may be S-NSSAI or NSSAI, which is not limited in the disclosure.

In a possible implementation, the one or more pieces of feature information applicable to RA may be any feature information applicable to the RA, or specified feature information applicable to the RA.

It should be noted that the one or more pieces of feature information applicable to RA can be feature information that triggers random access, or a feature through with the terminal intends to achieve early indication through a specific RA resource, and are different from feature information supported by an RA that the terminal ultimately initiates. The feature information supported by the RA ultimately initiated by the terminal may include at least part of the one or more pieces of feature information applicable to RA.

In a possible implementation, the first information may be used to indicate at least one of the following: recording any feature information applicable to RA; or recording specified feature information applicable to RA.

Correspondingly, the first information is used to instruct to record any of the feature information applicable to RA. When receiving the first information, the terminal may determine to record the one or more pieces of feature information applicable to RA.

The first information is used to instruct to record the specified feature information applicable to RA. The terminal may determine to record the one or more pieces of feature information applicable to RA when there is the specified feature information applicable to RA.

In another possible implementation, the first information may be RA configuration information associated with one or more features.

The terminal may determine to record the one or more pieces of feature information applicable to RA when the network device has sent the RA configuration information associated with one or more features, that is, when the first information is sent.

Or, the terminal may determine to record the one or more pieces of feature information applicable to RA when the one or more pieces of feature information applicable to RA include the one or more features associated with the RA configuration information sent by the network device.

In a possible implementation, the first information is used to indicate recording any feature information applicable to RA. When the terminal determines to record the one or more pieces of feature information applicable to RA, the terminal may record all the feature information applicable to RA.

In another possible implementation, the first information is used to indicate recording any feature information applicable to RA. When the terminal determines to record the one or more pieces of feature information applicable to RA, the terminal may record feature information applicable to RA that is not supported by a selected RA resource.

In another possible implementation, the first information may be used to indicate recording any feature information applicable to RA. When the terminal determines to record the one or more pieces of feature information applicable to RA, the terminal may record specified feature information applicable to RA. The specified feature information applicable to RA may be determined by the terminal.

In another possible implementation, the first information may be used to indicate recording any feature information applicable to RA. When the terminal determines to record the one or more pieces of feature information applicable to RA, the terminal records all the feature information corresponding to the specified feature information applicable to RA. The specified feature information applicable to RA may be determined by the terminal.

In another possible implementation, the first information may be used to indicate recording specified feature information applicable to RA. When the terminal determines to record the one or more pieces of feature information applicable to RA, the terminal may record all the feature information applicable to RA.

For example, the first information indicates recording SDT, and the terminal may record all feature information applicable to RA, i.e., SDT and CE.

In another possible implementation, the first information may be used to indicate recording specified feature information applicable to RA. When the terminal determines to record the one or more pieces of feature information applicable to RA, the terminal may record the feature information applicable to RA that is not supported by the selected RA resource in the specified feature information applicable to RA.

For example, if the first information indicates recording SDT and CE, and the feature information applicable to RA that is not supported by the RA resource selected by the terminal is CE, then the terminal only records CE.

In another possible implementation, the first information may be used to indicate recording the specified feature information applicable to RA. When the terminal determines to record the one or more pieces of feature information applicable to RA, the terminal records the specified feature information applicable to RA.

For example, the first information indicates recording SDT and CE, and the terminal performs recording when the feature information applicable to RA is SDT and CE.

In another possible implementation, the first information may be used to indicate recording the specified feature information applicable to RA. When the terminal determines to record the one or more pieces of feature information applicable to RA, the terminal records all the feature information corresponding to the specified feature information applicable to RA.

For example, the first information indicates recording SDT and CE, and the feature information applicable to RA recorded by the terminal may be SDT, CE, SDT and RedCap, and/or CE and RAN slicing.

In another possible implementation, the first information is the RA configuration information associated with one or more features. When the terminal determines to record the one or more pieces of feature information applicable to RA, the terminal records all feature information applicable to RA.

That is, no matter what feature the RA configuration information sent by the network device is associated with, the terminal records all feature information applicable to RA.

In another possible implementation, the first information is the RA configuration information associated with one or more features. When the terminal determines to record the one or more pieces of feature information applicable to RA, the terminal records feature information applicable to RA that is not supported by a selected RA resource.

In another possible implementation, the first information is the RA configuration information associated with one or more features. When the terminal determines to record the one or more pieces of feature information applicable to RA, the terminal records specified feature information applicable to RA. The specified feature information applicable to RA may be determined by the terminal. For example, the feature information associated with the RA configuration information may be used as the specified feature information applicable to RA.

For example, the first information is RA configuration information associated with RedCap and CE, SDT, RedCap and SDT. The terminal performs recording when the feature information applicable to RA includes RedCap and CE, or SDT, or RedCap and SDT.

In another possible implementation, the first information is RA configuration information associated with one or more features. When the terminal determines to record the one or more pieces of feature information applicable to RA, it records all feature information corresponding specified feature information applicable to RA.

For another example, the first information is RA configuration information associated with RedCap and CE, SDT, RedCap and SDT. The terminal performs recording when the feature information applicable to RA includes RedCap, CE or SDT, for example, the feature information applicable to RA includes the RedCap and the RAN Slicing.

In a possible implementation, the terminal may record the one or more pieces of feature information applicable to RA for each RA attempt.

In another possible implementation, the terminal may record the one or more pieces of feature information applicable to RA for each RA procedure. Each RA procedure includes multiple RA attempts.

In a possible implementation, the RA includes at least one of the following: two-step RA; or four-step RA.

The RA at least includes CBRA.

In the above embodiments, when the terminal determines to record the one or more pieces of feature information applicable to RA according to the first information sent by the network device, it can record the one or more pieces of feature information applicable to RA, so that the network device can optimize the RA resource configuration according to the terminal needs after the one or more pieces of feature information applicable to RA are reported to the network device subsequently, with high availability.

In some optional embodiments, the terminal may not perform the recording.

In a possible implementation, when the terminal determines that the network device has not sent the first information, the terminal determines not to perform the recording.

The first information may be used to indicate at least one of the following: recording any feature information applicable to RA; recording specified feature information applicable to RA.

Or, the first information may be RA configuration information associated with one or more features.

That is, when the terminal does not receive the first information sent by the network device, it determines not to perform the recording.

In another possible implementation, if the terminal receives second information sent by the network device, and the second information instructs the terminal not to record the feature information applicable to RA, the terminal may determine not to perform the recording.

In another possible implementation, the first information may be used to indicate recording the specified feature information applicable to RA. When the terminal determines that the feature information applicable to RA does not include the specified feature information applicable to RA, the terminal determines not to perform the recording.

In another possible implementation, the first information may be RA configuration information associated with one or more features. When the one or more pieces of feature information applicable to RA do not include the one or more features associated with the RA configuration information, the terminal determines not to record the one or more pieces of feature information applicable to RA.

For example, the first information is RA configuration information associated with RedCap and CE, SDT, RedCap and SDT, and the feature information applicable to RA is RAN slicing, then it is determined not to perform the recording.

In the above embodiments, the terminal may not perform recording, thereby saving terminal resources and achieving high availability.

In some optional embodiments, the above-mentioned solutions for determining to record the one or more pieces of feature information applicable to RA can be implemented individually or in combination, and the disclosure is not limited to this.

For example, when the terminal has one or more pieces of feature information applicable to RA and the selected RA resource does not support the feature information applicable to RA, it is determined to record the one or more pieces of feature information applicable to RA.

The above is only an illustrative description. In actual applications, when it is determined that one or more of the solutions for recording the one or more pieces of feature information applicable to RA are met, the one or more pieces of feature information applicable to RA may be recorded.

In the following, an information sending method provided by the present disclosure will be introduced from the network device side.

An embodiment of the present disclosure provides an information sending method. Referring to FIG. 4, FIG. 4 is a flow chart of an information sending method according to an embodiment, which can be executed by a network device. The method can include the following steps.

At step 401, first information is sent, the first information is used by a terminal to determine to record one or more pieces of feature information applicable to random access (RA).

In embodiments of the disclosure, the network device includes any network side node. For example, the network side node may be a CN side node, a RAN side node, etc., and the disclosure does not limit this.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; or identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), the disclosure does not limit this.

In a possible implementation, the one or more pieces of feature information applicable to the RA may be any feature information applicable to the RA, or specified feature information applicable to the RA.

It should be noted that the one or more pieces of feature information applicable to RA can be feature information that triggers random access, or a feature through which the terminal intends to achieve early indication through a specific RA resource, and are different from feature information supported by an RA that the terminal ultimately initiates. The feature information supported by the RA ultimately initiated by the terminal may include at least part of the one or more pieces of feature information applicable to RA.

In a possible implementation, the first information may be used to indicate at least one of the following: recording any feature information applicable to RA; or recording specified feature information applicable to RA..

In another possible implementation, the first information may be RA configuration information associated with one or more features.

The solution for the terminal side to determine, based on the first indication information sent by the network device, to record the one or more pieces of feature information applicable to random access RA is similar to the solution at step 301 above, and will not be described again here.

In a possible implementation, the RA includes at least one of the following: two-step RA; or four-step RA.

The RA at least includes CBRA.

In the above embodiments, the network device can send the first information. The first information is used by the terminal to determine to record the one or more pieces of feature information applicable to RA. The terminal performs recording for subsequent reporting to the network device. The network device can then optimize RA resource configuration according to terminal requirements, achieving high availability.

The above scheme is further illustrated below with examples.

Embodiment 1: when a terminal triggers RA, if the terminal has one or more pieces of feature information applicable to RA, it directly records the one or more pieces of feature information applicable to RA.

Optionally, the terminal may record the one or more pieces of feature information applicable to RA for each RA attempt. Or, the terminal may record the one or more pieces of feature information applicable to RA for each RA procedure. Each RA procedure includes multiple RA attempts.

As a possible implementation, the terminal records the one or more pieces of feature information applicable to RA.

As a possible implementation, if an RA resource selected by the terminal supports all feature information applicable to RA, 1 bit may be used to indicate that the selected RA resource supports all feature information applicable to RA.

If the RA resource selected by the terminal fails to support all feature information applicable to RA, all feature information applicable to RA is recorded, or feature information applicable to RA that is not supported by the selected RA resource is recorded.

As a possible implementation, one or more pieces of feature information applicable to RA can be indicated through a separate IE or through an extension bit raPurpose.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; or identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), the disclosure does not limit this.

The RA includes 2-step RA and/or 4-step RA, including at least CBRA.

The terminal may record all feature information applicable to RA, or record the feature information applicable to RA that is not supported by the selected RA resource, or record the specified feature information applicable to RA, or record all feature information corresponding to the specified feature information applicable to RA.

Embodiment 2: the terminal determines whether to record one or more pieces of feature information applicable to RA based on whether a selected RA resource supports all feature information applicable to RA.

Optionally, the terminal may record the one or more pieces of feature information applicable to RA for each RA attempt. Or, the terminal may record the one or more pieces of feature information applicable to RA for each RA procedure. Each RA procedure includes multiple RA attempts.

If the RA resource selected by the terminal supports all feature information applicable to RA, the terminal determines not to perform the recording.

If the RA resource selected by the terminal fails to support all feature information applicable to RA, the terminal determines to record the one or more pieces of feature information applicable to RA.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; or identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), the disclosure does not limit this.

The RA includes 2-step RA and/or 4-step RA, including at least CBRA.

The terminal may record all the feature information applicable to RA, or record the feature information applicable to RA that is not supported by the selected RA resource, or record specified feature information applicable to RA, or record all the feature information corresponding to the specified feature information applicable to RA.

Embodiment 3: the terminal determines whether to record one or more pieces of feature information applicable to RA based on first information sent by a network device.

Optionally, the terminal may record the one or more pieces of feature information applicable to RA for each RA attempt. Or, the terminal may record the one or more pieces of feature information applicable to RA for each RA procedure. Each RA procedure includes multiple RA attempts.

As a possible implementation manner, the first information sent by the network device is used to instruct the terminal to record the one or more pieces of feature information applicable to RA. The terminal directly determines to perform the recording based on the first information.

As a possible implementation manner, the first information sent by the network device is used to instruct the terminal to record specified feature information applicable to RA.

Further, the terminal may determine not to perform the recording when the feature information applicable to RA does not include the specified feature information applicable to RA.

The terminal may determine to record the one or more feature information applicable to RA when the feature information applicable to RA includes the specified feature information applicable to RA.

For example, the first information sent by the network device is used to instruct the terminal to record specified feature information applicable to RA, i.e., RedCap. If the feature information applicable to RA is RedCap and CE, the terminal can only record the RedCap indicated by the network device, or record feature information RedCap and CE corresponding to the RedCap.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; or identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), the disclosure does not limit this.

The RA includes 2-step RA and/or 4-step RA, including at least CBRA.

The terminal may record all the feature information applicable to RA, or record the feature information applicable to RA that is not supported by the selected RA resource, or record the specified feature information applicable to RA, or record all the feature information applicable to RA corresponding to the specified feature information.

The terminal may also determine not to perform the recording based on second information sent by the network device. The second information is used to indicate not to record the one or more pieces of feature information applicable to RA.

Embodiment 4: the terminal determines whether to record one or more pieces of feature information applicable to RA based on the first information sent by the network device.

Optionally, the terminal may record the one or more pieces of feature information applicable to RA for each RA attempt. Or, the terminal may record the one or more pieces of feature information applicable to RA for each RA procedure. Each RA procedure includes multiple RA attempts.

As a possible implementation manner, the first information is RA configuration information associated with one or more features.

If the network device sends the RA configuration, the terminal records the one or more pieces of feature information applicable to RA.

If the network device does not send the RA configuration, the terminal determines not to perform the recording.

As a possible implementation, for recording any specified feature information applicable to RA sent by network device, the terminal performs the recording.

As a possible implementation, the recording is performed when the one or more of the feature information applicable to RA include the specified feature information. That is, the terminal only records a triggering feature corresponding to an RA triggered by a feature of a specific RA configuration sent by the network.

For example, the first information sent by the network device is the RA configuration of RedCap and CE, SDT, RedCap and SDT, and the terminal performs the recording only when the one or more of the feature information applicable to RA include RedCap or CE or SDT. That is, if an RA is triggered by RAN slicing, the recording is determined not to be performed.

In embodiments of the present disclosure, the feature information includes but is not limited to at least one of the following: SDT; RedCap; RAN slicing; or CE.

Optionally, the RAN slicing includes but is not limited to at least one of the following: feature information for indicating that a feature is the radio network slicing; or identification information for identifying the radio network slicing. The identification information may be a Network Slice AS Group (NSAG) identification, a radio network slice identification, etc. The radio network slice identification may be Single Network Slice Selection Assistance Information (S-NSSAI) or Network Slice Selection Assistance Information (NSSAI), the disclosure does not limit this.

The RA includes 2-step RA and/or 4-step RA, including at least CBRA.

The terminal may record all the feature information applicable to RA, or record the feature information applicable to RA that is not supported by a selected RA resource, or record the specified feature information applicable to RA, or record all feature information applicable to RA corresponding to the specified feature information.

Corresponding to the foregoing application function implementation method embodiments, the present disclosure also provides an application function implementation device embodiment.

Referring to FIG. 5, FIG. 5 is a block diagram of an information recording apparatus according to an exemplary embodiment. The apparatus is applied to a terminal and includes:
a recording module 501, configured to record one or more pieces of feature information applicable to random access (RA).

Referring to FIG. 6, FIG. 6 is a block diagram of an information recording apparatus according to an exemplary embodiment. The apparatus is applied to a base station and includes:
a sending module 601, configured to send first information; in which the first information is used by the terminal to determine to record one or more pieces of feature information applicable to random access (RA).

For the apparatus embodiments, they basically corresponds to the method embodiments, relevant details may refer to the description of the method embodiments. The apparatus embodiments described above are only illustrative. The units described above as separate components may or may not be physically separated. The components shown as units may or may not be physical units, that is, they may be located in a place, or can be distributed to multiple network units. Some or all of the modules can be selected according to actual needs to achieve the purpose of the solutions of the disclosure. Those skilled in the art can understand and implement the solutions without any creative effort.

Correspondingly, the present disclosure also provides a computer-readable storage medium that stores a computer program, and the computer program is used to execute the information recording methods according to any of the above embodiments.

Correspondingly, the present disclosure also provides a computer-readable storage medium that stores a computer program, and the computer program is used to execute the information sending method according to any of the above embodiments.

Correspondingly, the present disclosure also provides an information recording device, including:
a processor;
a memory for storing instructions executable by the processor.

The processor is configured to execute the information recording methods at the terminal side according to any of the above embodiments.

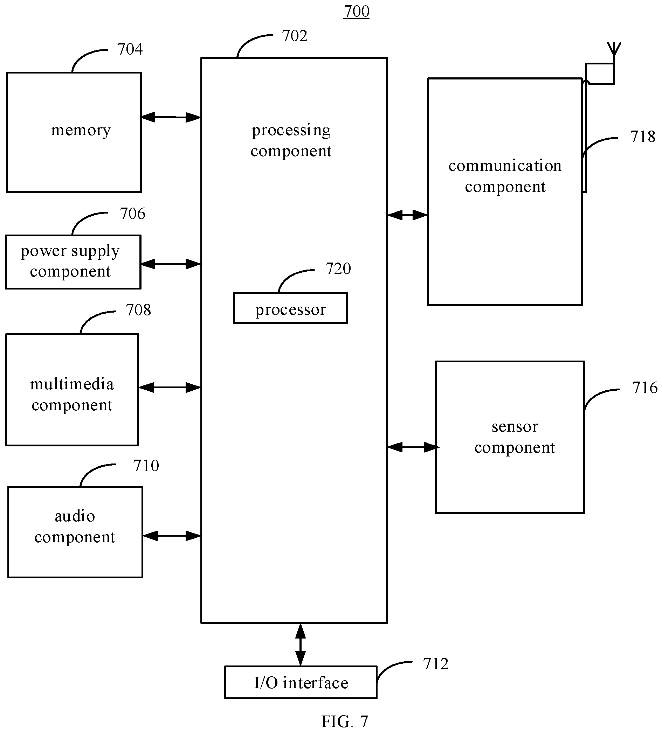

FIG. 7 is a block diagram of an information recording device 700 according to an exemplary embodiment. For example, the device 700 may be a mobile phone, a tablet computer, an e-book reader, a multimedia playback device, a wearable device, a vehicle-mounted user equipment, an iPad, a smart TV and other terminals.

Referring to FIG. 7, the device 700 may include one or more of the following components: a processing component 702, a memory 704, a power supply component 706, a multimedia component 708, an audio component 710, an input/output (I/O) interface 712, a sensor component 716, and a communication component 718.

The processing component 702 generally controls the overall operations of the device 700, such as operations associated with display, telephone calls, random access of data, camera operations, and recording operations. The processing component 702 may include one or more processors 720 to execute instructions to complete all or part of the steps of the above information recording method. Additionally, the processing component 702 may include one or more modules that facilitate interaction between the processing component 702 and other components. For example, the processing component 702 may include a multimedia module to facilitate interaction between the multimedia component 708 and the processing component 702. As another example, the processing component 702 can read executable instructions from the memory to implement the steps of the information recording method provided by the above embodiments.

The memory 704 is configured to store various types of data to support operations at the device 700. Examples of such data include instructions for any application or method operating on the device 700, contact data, phonebook data, messages, pictures, videos, etc. The memory 704 may be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 706 provides power to the various components of device 700. The power supply component 706 may include a power management system, one or more power supplies, and other components associated with generating, managing, and distributing power to the device 700.

The multimedia component 708 includes a display screen that provides an output interface between the device 700 and the user. In some embodiments, the multimedia component 708 includes a front-facing camera and/or a rear-facing camera. When the device 700 is in an operating mode, such as a shooting mode or a video mode, the front camera and/or the rear camera may receive external multimedia data. Each front-facing camera and rear-facing camera can be a fixed optical lens system or have a focal length and optical zoom capabilities.

The audio component 710 is configured to output and/or input audio signals. For example, the audio component 710 includes a microphone (MIC) configured to receive external audio signals when the device 700 is in an operating mode, such as a call mode, a recording mode, or a speech recognition mode. The received audio signals may be further stored in the memory 704 or sent via the communication component 718. In some embodiments, the audio component 710 also includes a speaker for outputting audio signals.

The I/O interface 712 provides an interface between the processing component 702 and a peripheral interface module, which may be a keyboard, a click wheel, a button, etc. These buttons may include, but are not limited to a home button, a volume buttons, a start button, or a lock button.

The sensor component 716 includes one or more sensors for providing various aspects of status assessment for the device 700. For example, the sensor component 716 can detect the open/closed state of the device 700, the relative positioning of components, such as the display and keypad of the device 700, and the sensor component 716 can also detect a change in position of the device 700 or a component of the device 700, the presence or absence of a user contact with the device 700, orientation or acceleration/deceleration of the device 700, and a temperature change of the device 700. The sensor component 716 may include a proximity sensor configured to detect the presence of a nearby object without any physical contact. The sensor component 716 may also include a light sensor, such as a CMOS or CCD image sensor, for use in imaging applications. In some embodiments, the sensor component 716 may also include an acceleration sensor, a gyroscope sensor, a magnetic sensor, a pressure sensor, or a temperature sensor.

The communication component 718 is configured to facilitate wired or wireless communications between the device 700 and other devices. The device 700 may access a wireless network based on a communication standard, such as Wi-Fi, 2G, 3G, 4G, 5G or 6G, or a combination thereof. In an exemplary embodiment, the communication component 718 receives broadcast signals from an external broadcast management system or broadcast related information via a broadcast channel. In an exemplary embodiment, the communications component 718 also includes a near field communications (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 700 may be implemented by one or more application specific integrated circuits (ASICs), digital signal processors (DSPs), digital signal processing devices (DSPDs), programmable logic devices (PLDs), field programmable Gate array (FPGA), controllers, microcontrollers, microprocessors or other electronic components, for executing any of the above information recording methods on the terminal side.

In an exemplary embodiment, a non-transitory machine-readable storage medium including instructions, such as the memory 704 including instructions is also provided. The instructions can be executed by the processor 720 of the device 700 to complete the above information recording method. For example, the non-transitory computer-readable storage medium may be a ROM, a random access memory (RAM), a CD-ROM, a magnetic tape, a floppy disk, an optical data storage device, etc.

Correspondingly, the present disclosure also provides an information sending device, including:
a processor;
a memory for storing instructions executable by the processor.

The processor is configured to execute any one of the above information sending methods on the network device side.

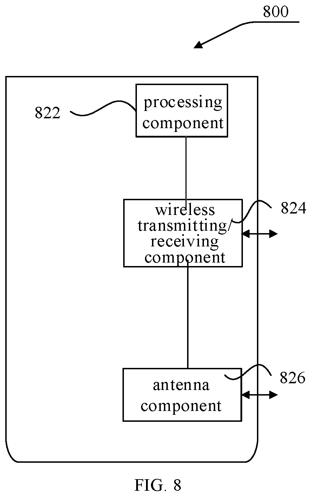

As shown in FIG. 8, FIG. 8 is a schematic structural diagram of an information sending device 800 according to an exemplary embodiment. The device 800 may be provided as a network device. Referring to FIG. 8, the device 800 includes a processing component 822, a wireless transmitting/receiving component 824, an antenna component 826, and a signal processing portion specific to the wireless interface. The processing component 822 may further include at least one processor.

One processor in the processing component 822 may be configured to perform any one of the above information sending methods.

Other embodiments of the disclosure will be readily apparent to those skilled in the art from consideration of the specification and practice of the disclosure disclosed herein. The present disclosure is intended to cover any variations, uses, or adaptations of the disclosure that follow the general principles of the disclosure and include common knowledge or customary technical means in the technical field that are not disclosed in the disclosure. It is intended that the specification and examples be considered as exemplary only, with a true scope and spirit of the disclosure being indicated by the following claims.

It is to be understood that the present disclosure is not limited to the precise structures described above and illustrated in the accompanying drawings, and various modifications and changes may be made without departing from the scope thereof. The scope of the disclosure is limited only by the appended claims.

## Claims

1. An information recording method, performed by a terminal, comprising:
recording one or more pieces of feature information applicable to random access (RA).

2. The method of claim 1, further comprising at least one of:
determining, by the terminal, to record the one or more pieces of feature information applicable to RA; or
determining, according to first information sent by a network device, to record the one or more pieces of feature information applicable to RA.

3. The method of claim 2, wherein determining, by the terminal, to record the one or more pieces of feature information applicable to RA comprises:
in response to the terminal having the one or more pieces of feature information applicable to RA, determining, by the terminal, to record the one or more pieces of feature information applicable to RA.

4. The method of claim 2, wherein determining, by the terminal, to record the one or more pieces of feature information applicable to RA comprises:
determining, by the terminal, to record the one or more pieces of feature information applicable to RA in response to determining that an RA resource selected by the terminal does not support the feature information applicable to RA.

5. The method of claim 2, wherein the first information is used to indicate at least one of:
recording any feature information applicable to RA; or
recording specified feature information applicable to RA.

6. The method of claim 2, wherein the first information is used to indicate recording specified feature information applicable to RA;
determining, according to the first information sent by the network device, to record the one or more pieces of feature information applicable to RA comprises:
recording the feature information applicable to RA in response to determining that the specified feature information is comprised in the one or more pieces of feature information applicable to RA.

7. The method of claim 2, wherein the first information is RA configuration information associated with one or more features.

8. The method of claim 2, wherein determining, according to the first information sent by the network device, to record the one or more pieces of feature information applicable to RA comprises:
determining to record the one or more pieces of feature information applicable to RA in response to determining that the network device has sent RA configuration information associated with one or more features.

9. The method according to claim 2, wherein determining, according to the first information sent by the network device, to record the one or more pieces of feature information applicable to RA comprise:
determining to record the one or more pieces of feature information applicable to RA in response to determining that the one or more pieces of feature information applicable to RA comprises one or more features associated with RA configuration information sent by the network device.

10. The method of any one of claims 1 to 9, wherein recording the one or more pieces of feature information applicable to RA comprises any of:
recording all feature information applicable to RA;
recording feature information applicable to RA that is not supported by a selected RA resource;
recording specified feature information applicable to RA; or
recording all feature information corresponding to specified feature information applicable to RA.

11. The method of any one of claims 1 to 9, wherein the feature information comprises at least one of:
small data transmission (SDT);
a reduced capability (RedCap) device;
radio network (RAN) slicing; or
coverage enhancement (CE).

12. The method of claim 11, wherein the RAN slicing comprises at least one of:
feature information for indicating that a feature is the radio network slicing; or
identification information for identifying the radio network slicing.

13. The method of any one of claims 1 to 9, wherein recording the feature information applicable to RA comprises any of:
recording the feature information applicable to RA based on each RA attempt; or
recording the feature information applicable to RA based on each RA procedure.

14. The method of any one of claims 1 to 9, wherein the RA comprises at least one of:
two-step RA; or
four-step RA.

15. The method of claim 14, wherein the RA at least comprises a contention-based random access (CBRA) procedure.

16. An information sending method, performed by a network device, comprising:
sending first information; wherein the first information is used by a terminal to determine to record one or more pieces of feature information applicable to random access (RA).

17. The method of claim 16, wherein the first information is used to indicate at least one of:
recording any feature information applicable to RA; or
recording specified feature information applicable to RA.

18. The method of claim 16, wherein the first information is RA configuration information associated with one or more features.

19. The method of any one of claims 16-18, wherein the feature information comprises at least one of:
small data transmission (SDT);
a reduced capability device (RedCap);
radio network (RAN) slicing; or
coverage enhancement (CE).

20. The method of claim 19, wherein the RAN slicing comprises at least one of:
feature information for indicating that a feature is the radio network slicing; or
identification information for identifying the radio network slicing.

21. The method of any one of claims 16-18, wherein the RA comprises at least one of:
two-step RA; or
four-step of RA.

22. The method of claim 21, wherein the RA at least comprises a contention-based random access (CBRA) procedure.

23. An information recording apparatus, applied to a terminal, and comprising:
a reporting module, configured to report specified information; wherein the specified information is associated with one or more pieces of feature information applicable to random access (RA).

24. An information sending apparatus, applied to a network device, and comprising:
a receiving module, configured to receive specified information; wherein the specified information is associated with one or more pieces of feature information applicable to random access (RA).

25. A computer-readable storage medium having a computer program stored thereon that is used to perform the information recording method of any one of claims 1-15.

26. A computer-readable storage medium having a computer program stored thereon that is used to perform the information recording method of any one of claims 16-22.

27. An information recording device, comprising:
a processor; and
a memory for storing instructions executable by the processor;
wherein, the processor is configured to perform the information recording method of any one of claims 1-15.

28. An information sending device, comprising:
a processor; and
a memory for storing instructions executable by the processor;
wherein, the processor is configured to perform the information recording method of any one of claims 16-22.
